# EUROPEAN PATENT SPECIFICATION

(11) **EP 2 035 258 B1**
(45) Date of publication and mention of the grant of the patent: **07.11.2012**
(21) Application number: 07748274.3
(22) Date of filing: 26.06.2007
(51) Int. Cl.: F16B 37/04, B60R 9/048

(54) **Load carrier assembly**
Lastenträgeranordnung
Agencement de support de charge

(30) Priority: 30.06.2006 SE 0601452
(43) Date of publication of application: 18.03.2009
(73) Proprietor: Thule Sweden AB, 330 33 Hillerstorp (SE)
(72) Inventor: MAGNUSSON, Karl-Johan, S-330 33 Hillerstrop (SE)
(74) Representative: Valea AB
(86) International application number: PCT/SE2007/000613
(87) International publication number: WO 2008/002241

(56) References cited:
- EP-A- 1 733 921
- WO-A1-86/00584
- WO-A1-2004/094194
- US-A- 4 358 037
- US-A- 4 460 116

## Description

### Technical area

The present invention refers to a load carrier assembly comprising a load stop for supporting load, which is transported on a load carrier or similar, arranged on a vehicle, which load carrier comprising at least one load carrying tube with at least one groove for fastening the load stop at the load carrying tube, and which load stop comprising a substantially rigid bracket, intended to supportingly being arranged adjacent said load, and a fastening portion, for mounting the load stop at the load carrying tube, wherein said bracket is pivotally connected to the fastening portion, such that the load stop is foldable between at least a raised working position and a folded transporting position.

### State of the art

A load stop of introductory described kind is previously known by example WO 2004/094194, which show a load stop or a fastening block, provided with a lower fastening element intended to be introduced into a C-shaped groove of a roof rack, roof rail or similar, and a handle shaped upper part, which abutting against the upper side of the roof rack and being firmly tightened against this, by aid of a tightening means, which extends itself down to the fastening element. The load stop having one or several openings which can be used as a lug for a rope or a clamping strip or similar. A load carrier assembly according to the preamble of claim 1 is known from document US 4460116 A.

### Problem

The problem with a load stop of known kind is that it must be located in right position for the intended load. The load stop can often become an obstruction and must be dismantled before the roof rack can be utilized for other kind of load. This moment can be time-consuming for the craftsman and other workers which alternating transporting for example ladders, pipes, building boards, battens, etc. on the roof rack.

### Solution

The purpose with the present invention is to achieve a load stop, which easy can be placed in the right working position along a load carrying tube and fixed in this position. In addition, to achieve a load stop which on a simple way can be moved away and positioned in a transporting position.

This is achieved by the present invention with a load carrier assembly as defined in claim 1.

### Brief description of the figures

A load carrier assembly according to the present invention will hereafter be described closer with reference to enclosed figures, in which:
figure 1 is a schematic view in perspective of a load stop, according to the present invention, in a raised position,
figure 2 is a schematic view in perspective of a load stop, according to the present invention, in a folded position, and
figure 3 is a schematic cross-section of the load stop according to figure 2.

### Preferred embodiment

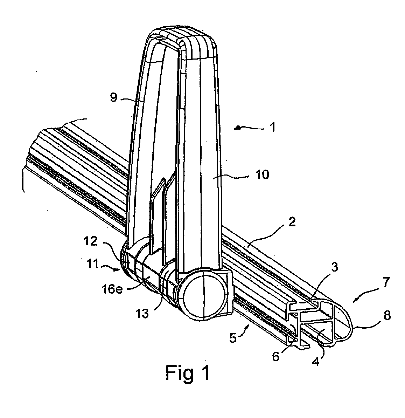

In figure 1 to 3 a load stop I arranged at a load carrying tube 2 is shown. The load stop is preferably made of a plastic material, but could also be made of metal. A load carrying tube extends generally between two load carrier feet crosswise over a roof of a vehicle or a truck bed. The load carrier feet can in a known manner be fixed at the vehicle or at an existing roof rail of the vehicle. It is previously known to make the load carrying tube of aluminium and thereby design the load carrying tube with a substantially C-shaped groove for mounting of accessories, wherein the accessories being fastened at the load carrying tube by aid of a bolt. The bolt having a rectangular head which can be moved in said groove. It is thus previously known to utilize a load carrying tube with a groove in its upper surface.

The load carrying tube 2 of the present invention comprising in addition to an upper C-shaped groove 3 also a lower C-shaped groove 4, which preferably is used for fastening of the load carrying tube, and at least at one side 5 arranged C-shaped groove 6. The other side 7 of the load carrying tube 2 having an arched surface 8, which is intended to be orientated forward in the direction of the vehicle to reduce the air resistance. Naturally, the load carrying tube 2 may also be designed symmetrically with a C-shaped groove arranged at all sides. It would also be possible to arranged several parallel grooves at least in one side.

The load stop 1 according to the present invention comprises a substantially rigid plate shaped bracket 9, with one of its side edges 10 arranged in a known manner against a load (not shown) on the load carrying tube 2, to support said load and preventing displacement of the load, and a fastening portion 11, which is intended to be moved in the right position in the C-shaped groove 6, and fixing the load stop 1 at the load carrying tube 2.

An important aspect of the invention lies in that the fastening portion 11 is pivotally connected to the plate shaped bracket 9. To achieve this the bracket 9, shown in the preferred embodiment, having a first partly tubular portion 12, fixedly attached with the bracket 9, and a fastening portion 11 comprising a corresponding second partly tubular portion 13, which is fixedly attached to a fastening plate 14, for fastening of the load stop 1 with said groove 6 in the load carrying tube 2. The tubular portions 12 and 13 is forked in engagement with each other, and a common axle 15 extends through the tubular portions 12 and 13, thereby fixing the portions relatively each other in an axial direction, but permitting them to be turned relatively each other around said axle 15. Preferably, the axle 15 is made of metal. Naturally, the axle 1 may be replaced by designing the tubular portions 12 and 13 in known manner, with one bayonet joint or snap-in closure. The meaning of the expression forked is that the portions 12 and 13 alternating extend around the axle 15 along the axial direction. Naturally, the portions may be designed similar to other known hinges.

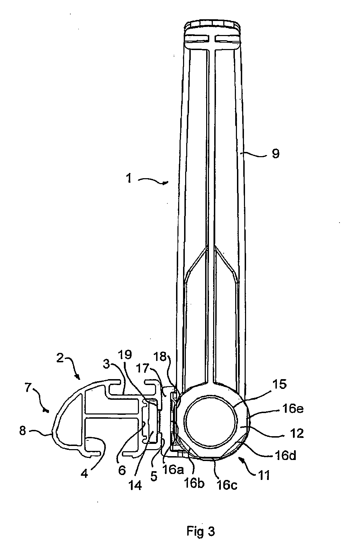

A further important aspect of the invention lies in that the partly tubular portion 12 having at least one substantially flat external supporting surface 16a-e, which is located on a radial distance from the centre of the axle 15. The distance is chosen such that the external supporting surface 16a-e at least partly abutting against the load carrying tube 2 or, as appear from figure 3, against a resilient pressure plate 17 located between the load carrying tube 2 and the bracket 9, comprising a spring 18. The external supporting surface 16a-e will thus act as an eccentric, which press the load stop 1 in direction out from the load carrying tube 2, wherein the fastening plate 14 is brought in engagement with the outer wall 19 of the C-shaped groove 6 and thereby clamping the load stop firmly against the load carrying tube 2. By providing the tubular portion 12 with several symmetric placed flat external support surfaces 16a -16e, located on different radial distance from the centre of the axle 15, as appear from figure 3, different clamping forces can be achieved.

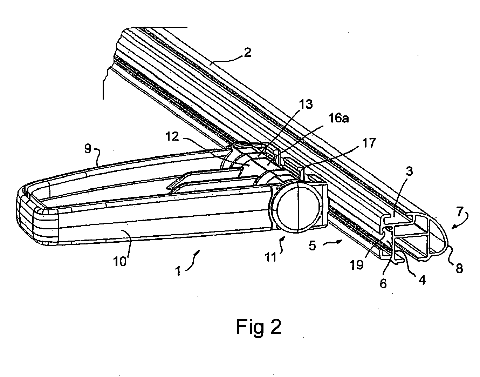

In the embodiment shown, five different external support surfaces being shown, but naturally any number can be chosen within the frame of the present claims. In the case that the external supporting surface 16c abutting against the pressure plate 17 the position shown in figure 2 is achieved, wherein the load stop 1 lies folded in a fixed position parallel with the roof of the vehicle. This position is a transport position where the load stop 1 is not obstructing any material which being loaded. From this position the load stop may be turned 45° upwards or downwards, depending on which direction the load stop being mounted towards, such that the external supporting surface 16b respective 16d being directed towards the pressure plate 17. In these positions the load stop I being released and may thus be pushed along the groove 6. By turning the load stop 1 further 45° either the external supporting surface 16a or 16e will abut against the pressure plate 17. These external support surfaces lies on the largest radial distance from the centre of the axle 15 and provides considerable clamping of the load stop 1 in a raised position as appear from figure 1 and 3. In this position the load stop 1 is intended to abut against the material and is dimensioned to withstand the intended weight.

Naturally, the load stop 1 may also be mounted in the upper groove 3, wherein the external supporting surface 16a is dimensioned to be on the largest radial distance from the centre. In an alternative embodiment the tubular portion 12 could thereby be arranged turnable connected relatively to the bracket 9. By mounting the load stop I in the upper groove 3 will not give equal advantage location of the load stop in said transport position compared to the load carrier assembly of the present invention where the load stop 1 is mounted in the groove 6 of the rearward side of the load carrying tube 2.

Finally, the tubular portions 12 and 13 could be arranged resilient movable relatively each other along the axle 15 and being provided with gripping means (not shown) to lock the tubular portions relatively each other, wherein a displacement against the force of the spring will release the gripping means from each other and permit said turning of the tubular portions 12 and 13 relatively each other around said axle.

## Claims

1. A load carrier assembly comprising a load stop (1) and a load carrying tube (2) for supporting a load, said load stop (1) being adapted to be assembled with said load carrying tube (2), said load carrying tube (2) having an upper surface for receiving said load, a rearward and a forward side (5, 7), and a C-shaped groove (6) arranged at least at one side (5, 7) of said load carrying tube (2),
said load stop (1) comprising a substantially rigid bracket (9) and a fastening portion (11) pivotally connected to each other,
said substantially rigid bracket (9) is moveable with respect to said fastening portion (11) between at least a raised working position, in which a load can be supported after assembly, and a transporting position,
**characterized in**
**that** said fastening portion (11) is arranged in said C-shaped groove (6) of said rearward side (5) and,
in that when said load stop (1) is in said transporting position said load stop (1) is below or in level with said upper surface of said load carrying tube (2).

2. The load carrier assembly according to claim 1, **characterized in that** said substantially rigid bracket (9) comprises a first partly tubular portion (12) fixedly connected to said substantially rigid bracket (9), and said fastening portion (11) comprises a second partly tubular portion (13) fixedly connected to said fastening portion (13), said second partly tubular portion (13) being fixedly connected to a fastening plate (14) for mounting in said C-shaped groove (6), wherein the tubular portions (12, 13) are forked in engagement with each other.

3. The load carrier assembly according to claim 2, **characterized in that** a common axle (15) extends through said tubular portions (12, 13), wherein they are fixed relative to each other in an axial direction, but permits a turning relative to each other around said axle (15).

4. The load carrier assembly according to claim 3, **characterized in that** said first partly tubular portion (12) has at least one substantially flat external supporting surface (16a-e), which is located at a radial distance from said centre of the axle (15).

5. The load carrier assembly according to claim 4, **characterized in that** said at least one external supporting surface (16a-e), in the form of an eccentric, is adapted to press said load stop (1) in a direction out from said load carrying tube (2) after assembly.

6. The load carrier assembly according to claim 5, **characterized in that** said first and second tubular portions (12, 13) are arranged resilient moveably relative each other along said axle (15) and being provided with engagement means for locking said first and second tubular portions (12, 13) relative to each other.

7. The load carrier assembly according to claim 1, **characterized in that** said load carrying tube (2) comprises a second C-shaped groove (3,4), wherein said second C-shaped groove (3,4) is positioned on a separate side, with respect to said C-shaped groove (6) of said load carrying tube (2).

8. The load carrier assembly according to any of the claims 1 or 7, **characterized in that** said load stop (1) is moveable along said at least one C-shaped groove (6).

## Patentansprüche

1. Lastenträgeranordnung, umfassend einen Lastanschlag (1) und eine lasttragende Röhre (2) zum Abstützen einer Last, wobei der Lastanschlag (1) dafür ausgelegt ist, mit der lasttragenden Röhre (2) zusammenmontiert zu werden, wobei die lasttragende Röhre (2) eine obere Oberfläche zum Aufnehmen der Last, eine nach hinten weisende und eine nach vorn weisende Seite (5, 7) und eine C-förmige Rille (6) aufweist, die wenigstens an einer Seite (5, 7) der lasttragenden Röhre (2) angeordnet ist, wobei der Lastanschlag (1) eine im wesentlichen steife Klammer (9) und einen Befestigungsbereich (11) umfasst, die schenkbar miteinander verbunden sind, wobei die im wesentlichen steife Klammer (9) gegenüber dem Befestigungsbereich (11) zwischen wenigstens einer angehobenen Arbeitsposition, in der nach dem Zusammenbau eine Last unterstützt werden kann, und einer Postition zum Transport beweglich ist, **dadurch gekennzeichnet, dass** der Befestigungsbereich (11) in der C-förmigen Rille (6) der nach hinten weisendem Seite (5) angeordnet ist, und dass der Lastanschlag (1), wenn der Lastanschlag (1) sich in der Position zum Transport befindet, sich unterhalb oder auf einer Ebene mit der oberen Oberfläche der lasttragenden Rohre (2) befindet.

2. Lastenträgeranordnung nach Anspruch 1, **dadurch gekennzeichnet, dass** die im wesentlichen steife Klammer (9) einen ersten teilweise röhrenförmigen Abschnitt (12) aufweist, der fest mit der im wesentlichen festen Klammer (9) verbunden ist, und dass der Befestigungsbereich (11) einen zweiten teilweise röhrenförmigen Abschnitt (13) aufweist, der fest mit dem Befestigungsbereich (11) verbunden ist, wobei der zweite teilweise röhrenförmige Abschnitt (13) fest mit einer Befestigungsplatte (14) zum Montieren in der C-förmigen Rille (6) verbunden ist, wobei die röhrenförmigen Abschnitte (12, 13) gabelartig ineinander greifen.

3. Lastenträgeranordnung nach Anspruch 2, **dadurch gekennzeichnet, dass** sich eine gemeinsame Achse (15) durch die röhrenförmigen Abschnitte (12, 13) erstreckt, in der sie in axialer Richtung relativ zueinander fixiert sind, die aber ein Drehen relativ zueinander um die Achse (15) erlaubt.

4. Lastentrageranordnung nach Anspruch 3, dadurch gekenntzeichnet, dass der erste teilweise röhreriformige Abschnitt (12) wenigstens eine im wesentlichen flache äußere Lagerfläche (16 a-e) aufweist, die radial von der Mitte der Achse (15) beabstandet angeordnet ist.

5. Lastenträgeranordnung nach Anspruch 4, **dadurch gekennzeichnet, dass** die wenigstens eine äußere Lagerfläche (16 a-e) in Form eines Exzenters dafür ausgelegt ist, den Lastanschlag (1) nach der Montage in einer Richtung vorn der lasttragenden Röhre (2) weg nach außen zu drücken.

6. Lastenträgeranordnung nach Anspruch 5, **dadurch gekennzeichnet, dass** die ersten und zweiten röhrenförmigen Abschnitte (12, 13) zueinander nachgiebig entlang der Achse (15) beweglich angeordnet und mit Eingriffsmitteln versehen sind, um die ersten und zweiten röhrenförmigen Abschnitte (12,13) relativ zueinander zu verriegeln.

7. Lastenträgeranordnung nach Anspruch 1, **dadurch gekennzeichnet, dass** die lasttragende Röhre (2) eine zweite C-förmige Rille (3,4) aufweist, wobei die zweite C-förmige (3,4) Rille an einer in Bezug auf die C-förmige Rille (6) anderen Seite der lasttragenden Röhre (2) angeordnet ist.

8. Lastenträgeranordnung nach einem der Absprüche 1 oder 7, **dadurch gekennzeichnet, dass** der Lastanschlag (1) entlang der wenigstens einen C-förmigen Rille (6) beweglich ist.

## Revendications

1. Ensemble de support de charge comprenant une butée de charge (1) et un tube porteur (2) destiné à porter une charge, ladite butée de charge (1) étant adaptée à être assemblée avec ledit tube porteur (2), celui-ci présentant une face supérieure destinée à recevoir ladite charge, une face arrière et une face avant (5, 7) et une gorge en forme de C (6) prévue au moins sur une face (5, 7) dudit tube porteur (2),
ladite butée de charge (1) comprenant un étrier essentiellement rigide (9) et une portion de fixation (11) qui sont reliés l'un à l'autre de manière pivotable, ledit étrier essentiellement rigide (9) étant déplaçable par rapport à la portion de fixation (11) entre au moins une position de travail haute, dans laquelle une charge peut être supportée après assemblage, et une position de transport,
**caractérisé en ce que**
ladite portion de fixation (11) est disposée dans ladite gorge en forme de C (6) de ladite face arrière (5) et
**en ce qu'**en position de transport de ladite butée de charge (1), celle-ci se situe au-dessous ou au même niveau que ladite face supérieure dudit tube porteur (2).

2. Ensemble de support de charge suivant la revendication 1, **caractérisé en ce que** ledit étrier essentiellement rigide (9) comprend une première portion partiellement tubulaire (12) reliée fixement audit étrier essentiellement rigide (9) et ladite portion de fixation (11) comprend une seconde portion partiellement tubulaire (13) reliée fixement à ladite portion de fixation (11), ladite seconde portion partiellement tubulaire (13) étant reliée fixement à une plaque de fixation (14) au montagne dans ladite gorge en forme de C (6), les portions tubulaires (12, 13) étant en forme de fourche, en prise l'une avec l'autre.

3. Ensemble de support de charge suivant la revendication 2, **caractérisé en ce qu'**un axe commun (15) s'étend à travers lesdites portions tubulaires (12, 13) fixant celles-ci l'une par rapport à l'autre dans une direction axiale tout en leur permettant de tourner l'une par rapport à l'autre autour dudit axe (15).

4. Ensemble support de charge suivant la revendication 3, **caractérisé en ce que** ladite première portion partiellement tubulaire (12) présente au moins une surface de support externe essentiellement plane (16a-e) qui est située à une distance radiale dudit centre de l'axe (15).

5. Ensemble de support de charge suivant la revendication 4, **caractérisé en ce qu'**au moins ladite surface de support externe (16a-e) qui présente la forme d'un excentrique est adaptée à presser ladite butée de charge (1) dans une direction hors dudit tube porteur (2) après assemblage.

6. Ensemble de support de charge suivant la revendication 5, **caractérisé en ce que** lesdites première et seconde portions tubulaires (12, 13) sont disposées déplaçables élastiquement l'une par rapport à l'autre le long dudit axe (15) et pourvues de moyens de prise destinés à verrouiller lesdites première et seconde portions tubulaires (12,13) l'une par rapport à l'autre.

7. Ensemble de support de charge suivant la revendication 1, **caractérisé en ce que** ledit tube porteur (2) comprend une seconde gorge en forme de C (3, 4), ladite second gorge en forme de C (3, 4) étant positionnée sur une face séparée par rapport à ladite gorge en forme de C (6) dudit tube porteur (2).

8. Ensemble de support de charge suivant une quelconque des revendications 1 à 7, **caractérisé en ce que** ladite butée de charge (1) est déplaçable le long de ladite gorge en forme de C (6),
